# EUROPÄISCHE PATENTSCHRIFT

(11) **EP 1 304 011 B1**
(45) Veröffentlichungstag und Bekanntmachung des Hinweises auf die Patenterteilung: **11.03.2009**
(21) Anmeldenummer: 01953858.6
(22) Anmeldetag: 04.07.2001
(51) Int. Cl.: H04M 3/08

(54) **ENTSTÖRUNGSPROZEDUR FÜR EIN ÜBERGEORDNETES NMC DURCH KORRELATION VON ALARMEN MIT ERGEBNISSEN VON AUTOMATISCHEN TESTS**
INTERFERENCE SUPPRESSION PROCEDURE FOR A SUPERORDINATE NMC BY CORRELATION OF ALARMS WITH RESULTS OF AUTOMATIC TESTS
PROCEDURE POUR SUPPRIMER LES INTERFERENCES, DESTINEE A UN CENTRE DE MAINTENANCE NATIONAL, DE RANG SUPERIEUR, PAR ETABLISSEMENT D'UNE CORRELATION ENTRE DES ALARMES ET DES RESULTATS DE TESTS AUTOMATIQUES

(30) Priorität: 24.07.2000 DE 10035966
(43) Veröffentlichungstag der Anmeldung: 23.04.2003
(73) Patentinhaber: SIEMENS AKTIENGESELLSCHAFT, 80333 München (DE)
(72) Erfinder: HIRSCH, Lucian, 81373 München (DE)
(86) Internationale Anmeldenummer: PCT/DE2001/002479
(87) Internationale Veröffentlichungsnummer: WO 2002/007703

(56) Entgegenhaltungen:
- WO-A-00/11884
- DE-A- 19 801 785
- DE-A- 19 805 494
- SCHMID E H ET AL: "GSM OPERATION AND MAINTENANCE" ELECTRICAL COMMUNICATION, ALCATEL. BRUSSELS, BE, 1993, Seiten 164-171, XP000368135 ISSN: 0013-4252
- MORA M ET AL: "ERMAS: AN EXPERT RADIO MOBILE ASSISTANCE SYSTEM" EXPERT SYSTEMS & THEIR APPLICATIONS ELEVENTH INTERNATIONAL CONFERENCE, 27-31 MAY 1991, AVIGNON, NANTERRE, FR, Bd. 5, 27. Mai 1991 (1991-05-27), Seiten 91-102, XP000676897

## Beschreibung

Die Erfindung betrifft ein Verfahren und eine Testeinrichtung zur Bearbeitung von Alarmmeldungen in einem Telekommunikationsnetz, insbesondere zur Bearbeitung von bei einem OMC eingehenden Alarmmeldungen durch ein NMC eines Mobiltelekommunikationsnetzes.

Das Dokument
Schmid et al.: "GSM Operation and Maintenance"), Electrical Communication, Alcatel, Brussels, BE, 1993, Seiten 164-171
beschreibt den allgemeinen Aufbau und die Funktionalität eines Managementsystems für ein GSM Mobilfunkkommunikationssystem. Ein OMC stellt eine Schnittstelle zu anderen Managementeinrichtungen, insbesondere zu einem NMC, zur Verfügung. Über diese Schnittstelle können Informationen betreffend die Netzwerkelemente übertragen werden.

Das Dokument
Mora et al.: "ERMAS: An Expert Radio Mobile Assistance System", Expert Systems & their Application Eleventh International Conference, 27-31 May 1991, Avignon, Nanterre, FR, Band 5, 27. Mai 1991, Seiten 91-102
beschreibt ein ERMAS genanntes System zur Überwachung eines italienischen 450 MHz Mobilfunknetzes.

Beispielweise aus dem Fachbuch "GSM - Switching services and protocols" von Jörg Eberspächer, ISBN0-471-98278-4, Seite 231 bis 232, ist es bekannt, dass in einem digitalen Mobiltelekommunikationsnetz neben lokal an mehreren Orten des Mobiltelekommunikationsnetzes angeordneten Überwachungszentren (= OMC, Operation and Maintenance Center) auch mindestens ein diesen lokalen Überwachungszentren funktionell übergeordnetes Überwachungszentrum (NMC, National Maintenance Center) vorgesehen ist. Das übergeordnete Überwachungszentrum NMC übernimmt beispielsweise am Wochenende und an Feiertagen automatisch Überwachungs- und Wartungsfunktionen von lokalen Überwachungszentren OMC, insbesondere insoweit die OMC-Überwachungszentren zumindest teilweise am Wochenende und an Feiertagen nicht besetzt sind.

Somit überwacht ein NMC mehrere OMC's die an Hardware von in der Regel unterschiedlichen Herstellern angeschlossen sind über eine gemeinsame funktionale Schnittstelle. Da die herstellerunabhängige Schnittstelle zwischen OMC und NMC nur sogenannte Functional Managed Objects (FMO) kennt, herstellerspezifische und hardwarebezogene Angaben an dieser Schnittstelle also nicht möglich sind, werden Alarme, die in Elementen eines Telekommunikationsnetzes durch Hardware-Fehler generiert wurden und bei einem OMC eingehen, vom OMC zu Alarmen im FMO-Format umgewandelt und an ein NMC als A-larmbenachrichtigungen weitergeleitet (Alarme werden grundsätzlich an das NMC weitergeleitet aber nur zu bestimmten Zeiten wie Wochenenden etc zur Behandlung im NMC dorthin weitergeleitet). Reparaturmaßnahmen für Hardware im Ortsbereich eines regionalen OMC werden an Wochenenden und Feiertagen durch das NMC veranlasst, da die regionalen OMC zu dieser Zeit nicht besetzt sind.
Bestimmte Hardware-Fehler können zwar grundsätzlich auch ohne Servicepersonal durch entsprechende "Tests" behoben werden, jedoch ist dies durch ein NMC in der Regel nicht möglich, da im NMC in der Regel keine Detailkenntnisse über die unterschiedliche Hardeware (unterschiedlicher Hersteller) im Bereich der regionalen OMC und damit auch keine für diese Hersteller- spezifische Hardware geeigneten Tests vorliegen.

Aufgabe der vorliegenden Erfindung ist ein möglichst einfaches und effizientes Alarmmeldungshandling durch ein NMC für Alarmmeldungen, welche in einem OMC zu Zeiten eingehen, zu welchen diese Alarmmeldungen vom NMC zu bearbeiten sind. Die Aufgabe wird jeweils durch die Gegenstände der unabhängigen Ansprüche gelöst.

Wenn für erfindungsgemäß in einem OMC von durch das OMC betreuter regional angeordneter Hardware eingehende Alarme zunächst automatisch (zumindest in vorgegebenen Fällen von Alarmen) ein "Test" betreffend die Ursache der eingehenden Alarmmeldung gestartet wird, können einige Alarmmeldungen bereits aufgrund des "Tests" erledigt werden, insbesondere wenn der Test eine spezifische automatische Entstörungsprozedur für die Alarmmeldung umfasst. Überdies können bei Alarmmeldungen, welche nach Durchführung des Tests an ein übergeordnetes Überwachungszentrum (NMC) gesendet werden sollen, aus dem automatisch ausgeführten Test resultierende Testergebnisse mitgesandt werden, um im NMC präzisere Abstimmung von geeigneten Maßnahmen veranlassen zu können, ohne im NMC detailiert die Alarmmeldung auslösende Hardware im Bereich des OMC zu kennen.

Besonders vorteilhafte Ausgestaltungen ergeben sich aus den Unteransprüchen.
Der Test umfasst zweckmäßig eine Korrelation der beim OMC eingegangenen Alarmmeldungen mit (bei einer im Rahmen des Tests erfolgten Untersuchung der die Alarmmeldung auslösenden Hardware eingehenden) weiteren Alarmmeldungen und sonstigen Meldungen, insbesondere Testergebnissemeldungen.
Ein Test wird durch das OMC zweckmäßig nur bei einer vorgegebenen Art von Alarmen, welche in einer mit eingehenden Alarmmeldungen zu vergleichenden Liste im OMC enthalten sind, durch das OMC automatisch gestartet.

Vorzugsweise wird das Verfahren nur für gemäß einer Tabelle im OMC als kritisch eingestufte Arten von Hardware-Alarmen ausgeführt. Die Verwendung einer Tabelle im OMC betreffend kritische Hardwarealarme ermöglicht eine Berücksichtigung der herstellerspezifischen Ausprägung der Hardware im Bereich des OMC durch das OMC.
Zweckmäßig wird während des Tests bei der Untersuchung von die Alarmmeldung auslösender Hardware diese Hardware (Elemente des Mobiltelekommunikationsnetzes) vom Mobilkommunikationsnetz getrennt und davon unabhängig getestet. Dies ermöglicht ein sehr spezifisches Testen der Hardware-Elemente durch vorgegebene, beispielsweise über das OMC koordinierte, herstellerspezifische Testverfahren.

Die Erfindung ist als Vorrichtung, insbesondere seitens eines lokalen (regionalen) Überwachungszentrums (OMC), anspruchsgemäß implementierbar.

Weitere Merkmale und Vorteile ergeben sich aus der nachfolgenden Beschreibung eines Ausführungsbeispieles anhand der Zeichnung. Dabei zeigt
- Figur 1: ein NMC, OMC und BSS während einer erfindungsgemäßen Bearbeitung einer Alarmmeldung und
- Figur 2: Teile der Kommunikation zwischen einem NMC und einem OMC während einer erfindungsgemäßen Bearbeitung einer Alarmmeldung.

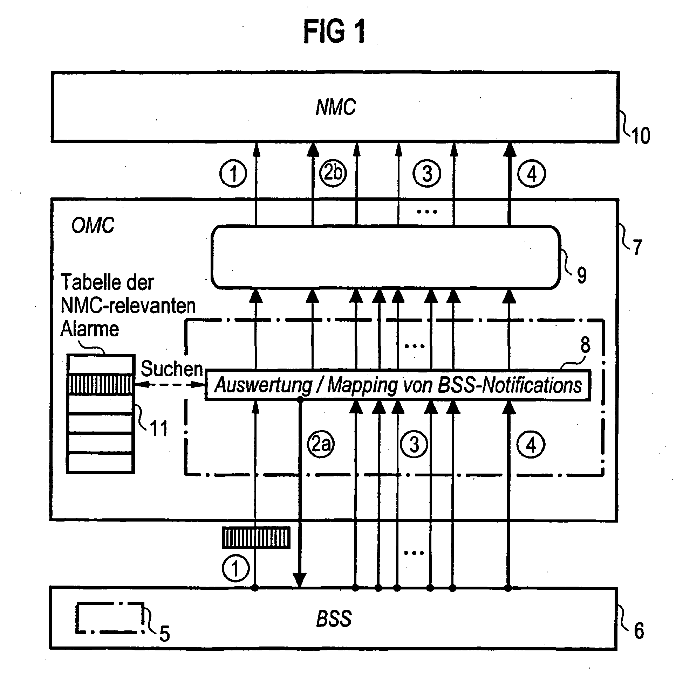

Gemäß Figur 1 wird aufgrund eines Hardware-Fehlers in einem Hardware- Element 5 in einem Basisstationssubsystem (BSS = Base Station Subsystem) eines digitalen Mobilkommunikationsnetzes (beispielsweise gemäß GSM, UMTS oder anderem Standard) eine Alarmmeldung 1 (in an sich bereits beispielsweise aus GSM oder anderen Standards bekannter Weise) vom Basis-Stations-Subsystem (6) an ein Überwachungszentrum (OMC = Operation and Maintenance Center = Betriebs- und Überwachungszentrum) (7) gesandt. Im Überwachungszentrum OMC (7) wird von einer erfindungsgemäßen Testeinrichtung (8) diese eingegangene Alarmmeldung bearbeitet. Hierzu wird zunächst in an sich bekannter (beispielsweise aus GSM bekannter) Weise von der Testeinrichtung (8) der Alarm (1) (über eine NMC-eigene EFD-Instanz 9) an ein dem lokalen Überwachungszentrum OMC übergeordnetes Überwachungszentrum (NMC = National Maintenance Center 10) als standardisierte Alarmweitermeldung 1 übertragen; dabei wird, wie bisher üblich, die Alarmmeldung 1 im OMC (7,8,9) gemäß einer Tabelle 11 in ein für die Übertragung an das NMC vorgegebenes Alarmweitermeldungsformat (welches sehr abstrakt ist und herstellerspezifische Eigenschaften der Hardware 5 nicht berücksichtigt) weitergemeldet.

Überdies wird erfindungsgemäß (von der Testeinrichtung 8 des lokalen Überwachungszentrums OMC 7) die von der Hardware des BSS kommende ursprüngliche Alarmmeldung (1) für die Konfiguration eines Tests analysiert; dabei werden Parameter der ursprünglichen, von der Hardware (5) des BSS (6) kommenden Alarmmeldung (1) durch die Testeinrichtung (8) mit Parametern (mehrer vorgegebener Arten von NMC-relevanten Alarmen) in einer Tabelle (11) des OMC (7,8) verglichen. Wenn in der Tabelle (11) keine Eintragung mit der ursprünglichen Alarmmeldung 1 vom BSS (6) entsprechenden parametern gefunden wird, erfolgt für den Alarm (1) kein erfindungsgemäßer Test. Wenn jedoch in der Tabelle (11) des lokalen Überwachungszentrums OMC (7) ein Eintrag mit gleichen oder entsprechenden Parametern wie den Parametern in der ursprünglichen Alarmmeldung (1) des BSS gefunden wird, wird ein erfindungsgemäßer Test (der eine Entstörungsprozedur umfasst) durch die Testeinrichtung (8) des lokalen Überwachungszentrums OMC (7) ausgelöst und durchgeführt. Hierzu sendet die Testeinrichtung (8) des lokalen Überwachungszentrums OMC (7) zunächst eine Testanforderung (Testrequest) (2a) an das Basis-Stations-Subsystem BSS (6) des Mobilkommunikationsnetzes; dies erfolgt in einer beispielsweise CMISE-standardisierten M-Action betreffend einen Resource-Self-Test (Hardware-Test) entsprechend einem Testkennungs-Parameter des Tabelleneintrags, welcher Parameter der ursprünglichen Alarmmeldung 1 entspricht.

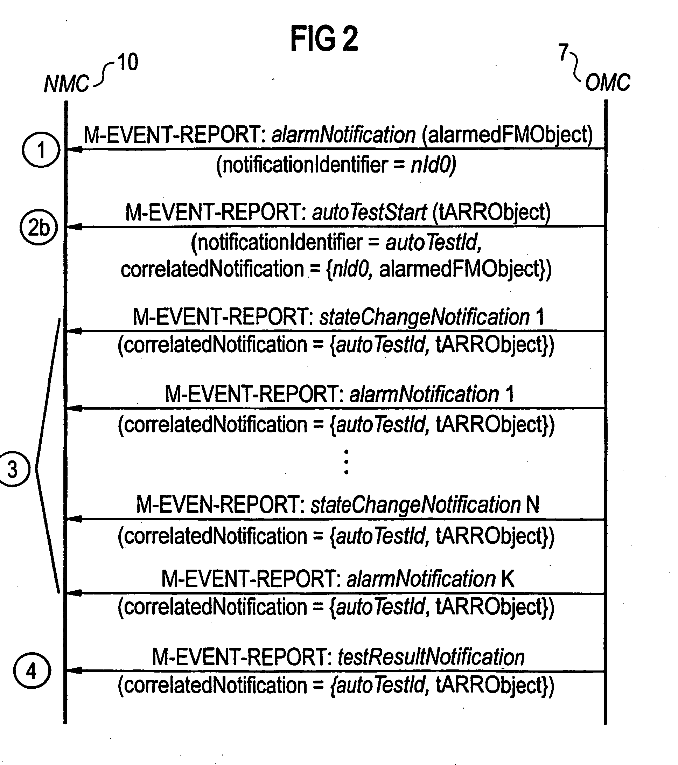

Ferner sendet das lokale Überwachungszentrum OMC (7) an das übergeordnete Überwachungszentrum NMC (10) eine Benachrichtigung darüber, dass es einen Hardeware-Test in der Hardware (5) des Basis-Stations-Substystem (6) veranlasst (2a) hat, so dass das NMC (10) darüber informiert ist, dass im Rahmen des Tests möglicherweise ausgelöste weitere Fehlermeldungen betreffend die Hardware (5) etc. auf den Test zurückzuführen sind und keine weiteren Fehler betreffen. Die Benachrichtigung erfolgt als Notification Autonomous-Test-Start (2b in Figur 1) -Message beispielsweise gemäß eines Standards (Standard ITU-TX.745:Systems-Management:Test-Manangement-Function), wobei das Feld Correlated-Notification (siehe Nachricht 2b in Figur 2) das Wertepaar {nld0, alarmed FMobject} aus der ursprünglichen Alarmmeldung (1) enthält.

Im Basis-Station-Subsystem (6) wird nach Eingang der Testaufforderung (2a) zunächst eine Testumgebung für den Test vorbereitet; hierfür wird beispielsweise ein Hardware-Board von die Alarmmeldung 1 auslösender Hardware 5 gesperrt (Parameter Administrative-State = locked). Dadurch bedingte, teils von der Hardware (5) im BSS (6) ausgelöste, weitere Alarmmeldungen an das OMC (7) werden vom OMC mit der Autonomous-Test-Start-Notification korreliert (= z.B. mit einer Nachricht betreffend diese ergänzt) und anschließend an das übergeordnete Überwachungszentrum NMC 10 weitergeleitet, um einem NMC-Operator zu ermöglichen, zu erkennen, dass diese weiteren Alarme Folge eines zuvor automatisch gestarteten Hardware-Tests sind und keine echten weiteren Hardware-Fehler betreffen.

Nach Vorbereitung der Testumgebung wird der vom OMC geforderte (2a) Test im BSS (6) gestartet. Am Testende werden die Ergebnisse als standardisierte Testresult-Notification von der Hardware (5) des BSS (6) an das lokale Überwachungszentrum OMC (7) gesendet. Vom lokalen Überwachungszentrum OMC (7) werden diese Ergebnisse/Parameter des Tests an das übergeordnete Überwachungszentrum NMC (10) gesandt (wobei diese mit der vorherigen Autonomous-Test-Start-Notification-2b korreliert werden).

Figur 2 zeigt die Übertragung von (anhand Figur 1 diskutierten) Mitteilungen vom lokalen Überwachungszentrum OMC (7-9) an das übergeordnete Überwachungszentrum NMC (10). Nach den bereits zu Figur 1 genannten Benachrichtigungen (1) und (2b) vom OMC (9) an das NMC (10) sind unter Bezugszeichen (3) und Bezugszeichen (4) weitere Benachrichtigungen aufgeführt, welche das OMC (9) nach Durchführung eines erfindungsgemäßen Tests an das NMC (10) zur Information über Testergebnisse (bzw. auch Testparameter) verwendet. Dabei werden alle mit Bezugszeichen (3) und (4) bezeichneten Benachrichtigungen im OMC (7) mit der vorherigen Autonomous-Test-Start-Notification dadurch direkt korreliert, dass das jeweilige Feld Correlated-Notification das Wertepaar (Notification Id, Object Instance} aus der Autonomous-Test-Start-Notifikation erhält (d.h. (Autotest Id, tARRObject)).

Da ihrerseits die Autonomous-Test-Start-Notification mit der ursprünglichen Alarmnotification korreliert ist (einen Hinweis darauf darstellt), entsteht im NMC eine indirekte Korrelation (= Hinweis auf einen Zusammenhang bezüglich betroffenen Hardware etc.) zwischen der Testergebnisse-Notification (4 in Figur 2) und der Alarmweitermeldung (1) von OMC (9) an das NMC (10 in Figur 2).

Die Erfindung ist im Telekommunikationsnetzen mit unterschiedlichsten Standards realisierbar, beispielsweise in GSM, UMTS oder anderen Netzen.

## Patentansprüche

1. Verfahren zur Bearbeitung von Alarmmeldungen (1) in einem Telekommunikationsnetz, insbesondere zur Bearbeitung von OMC-Alarmmeldungen (1) in einem Mobiltelekommunikationsnetz (6, 7, 10),
wobei von einem lokalen Überwachungszentrum (7) im Falle des Eingangs einer Alarmmeldung (1) bei diesem (7) ein Test für von der Alarmmeldung (1) bezeichnete Elemente (5) des Telekommunikationsnetzes (6) gestartet wird (2 a),
eine Alarmweitermeldung (1) betreffend diese eingegangene Alarmmeldung (1) vom lokalen Überwachungszentrum (7) an ein übergeordnetes Überwachungszentrum (10) gesandt wird, und beim lokalen Überwachungszentrum (7) eingehende
- den zu dieser Alarmmeldung (1) durchgeführten Test betreffende Ergebnisse (3/4), und/oder
- eine oder mehrere weitere Alarmmeldungen (1) mit Hinweis auf den Test an das übergeordnete Überwachungszentrum (10) abgesendet (3, 4) werden.

2. Verfahren nach Anspruch 1,
**dadurch gekennzeichnet, dass** das Verfahren nur zu vorgegebenen Zeiten, insbesondere an Wochenenden und Feiertagen, durchgeführt wird.

3. Verfahren nach einem der vorhergehenden Ansprüche,
**dadurch gekennzeichnet, dass** der Test eine automatische Entstörungsprozedur umfasst.

4. Verfahren nach einem der vorhergehenden Ansprüche,
**dadurch gekennzeichnet, dass** das lokale Überwachungszentrum (7) den Test zumindest bei vorgegebenen Arten (11) von Alarmen automatisch ohne beim übergeordneten Überwachungszentrum (10) rückzufragen startet (2a).

5. Verfahren nach einem der vorhergehenden Ansprüche,
**dadurch gekennzeichnet, dass** das Verfahren nur für als kritisch eingestufte, in einer Tabelle (11) im lokalen Überwachungszentrum (7) abgelegte Arten von Alarmen (1) durchgeführt wird.

6. Verfahren nach einem der vorhergehenden Ansprüche,
**dadurch gekennzeichnet, dass** nach Ausführung eines Tests vom lokalen Überwachungszentrum (7) an das übergeordnete Überwachungszentrum (10) Ergebnisse (4) des Tests und die die ursprüngliche Alarmmeldung (1) auslösende Hardware (5) des Telekommunikationsnetzes (6) betreffende Parameter unter Hinweis auf Zugehörigkeit des Tests zur bereits weitergeleiteten Alarmweitermeldung (1) gesandt werden.

7. Verfahren in einem der vorhergehenden Ansprüche,
**dadurch gekennzeichnet, dass** der Test versucht, die Ursache der Alarmmeldung zu beseitigen und dass ein negatives Testergebnis bedeutet, dass die Ursache für die Alarmmeldung vom lokalen Überwachungszentrum nicht beseitigt werden konnte.

8. Verfahren nach einem der vorhergehenden Ansprüche,
**dadurch gekennzeichnet, dass** für den Test zur Detektion und/oder Beseitigung der Ursache der Alarmmeldung (1) die durch die Alarmmeldung (1) genannte oder identifizierbarere Hardware (5) vom Telekommunikationsnetz (6) getrennt wird und darauf automatisiert getestet wird.

9. Verfahren nach einem der vorhergehenden Ansprüche,
**dadurch gekennzeichnet, dass** bei an das übergeordnete Überwachungszentrum (10) gemeldeten Testergebnissen(4) diese zum Ermöglichen des Ergreifens von Entstörungsmaßnahmen einem Operator des übergeordneten Überwachungszentrum (10) angezeigt werden.

10. Testeinrichtung für ein Überwachungszentrum (7), insbesondere zur Durchführung des Verfahrens nach einem der vorhergehenden Ansprüche,
- mit einem Eingang (in 8) für Alarmmeldungen (1) betreffend Störungen in Elementen (5) eines Telekommunikationsnetzes (6),
- mit einer Einrichtung (8) zum Auslösen (2b) von Tests für durch Alarmmeldungen (1) identifizierbare Elemente (5) des Telekommunikationsnetzes,
- mit einer Ausgangseinrichtung (9) zum Weitermelden von Alarmmeldungen (1) und Ergebnissen (3,4) von Tests an ein übergeordnetes Überwachungszentrum(10),
wobei die Testeinrichtung so ausgebildet ist, dass beim lokalen Überwachungszentrum (7) eingehende den zu einer Alarmmeldung (1) durchgeführten Test betreffende Ergebnisse (3/4) und/oder eine oder mehrere weitere Alarmmeldungen (1) mit Hinweis auf den Test an das übergeordnete Überwachungszentrum (10) abgesendet (3, 4) werden.

11. Testeinrichtung nach Anspruch 10, **dadurch gekennzeichnet, dass** sie so ausgebildet ist, dass eine Weiterleitung an das übergeordnete Überwachungszentrum (10) nur zu vorgegebenen Zeiten, insbesondere an Wochenenden und Feiertagen, durchgeführt wird.

12. Testeinrichtung nach einem der vorhergehenden Ansprüche 10 und 11,
**dadurch gekennzeichnet, dass** der Test eine automatische Entstörungsprozedur umfasst.

13. Testeinrichtung nach einem der vorhergehenden Ansprüche 10 bis 12,
**dadurch gekennzeichnet, dass** sie so ausgebildet ist, dass das lokale Überwachungszentrum (7) den Test zumindest bei vorgegebenen Arten (11) von Alarmen automatisch ohne Rückfrage beim übergeordneten Überwachungszentrum (10) startet (2a).

14. Testeinrichtung nach einem der vorhergehenden Ansprüche 10 bis 13,
**dadurch gekennzeichnet, dass** sie eine Tabelle (11) von als kritisch eingestuften Alarmen aufweist, für welche Alarme nur ein Test auszulösen ist.

15. Testeinrichtung nach einem der vorhergehenden Ansprüche 10 bis 14,
**dadurch gekennzeichnet, dass** sie so ausgebildet ist, dass nach Ausführung eines Tests vom lokalen Überwachungszentrum (7) an das übergeordnete Überwachungszentrum (10) Ergebnisse (4) des Tests und die ursprüngliche Alarmmeldung (1) auslösende Hardware (5) des Telekommunikationsnetzes (6) betreffende Parameter unter Hinweis auf die Zugehörigkeit des Tests zur bereits weitergeleiteten Alarmweitermeldung (1) gesandt werden.

16. Testeinrichtung in einem der vorhergehenden Ansprüche 10 bis 15,
**dadurch gekennzeichnet, dass** sie so ausgebildet ist, dass der Test versucht, die Ursache der Alarmmeldung zu beseitigen und dass ein negatives Testergebnis bedeutet, dass die Ursache für die Alarmmeldung vom lokalen Überwachungszentrum nicht beseitigt werden konnte.

17. Testeinrichtung nach einem der vorhergehenden Ansprüche 10 bis 16,
**dadurch gekennzeichnet, dass** sie so ausgebildet ist, dass für den Test zur Detektion und/oder Beseitigung der Ursache der Alarmmeldung (1) die durch die Alarmmeldung (1) genannte oder identifizierbarere Hardware (5) vom Telekommunikationsnetz (6) getrennt wird und unabhängig vom Telekommunikationsnetz getestet wird.

18. Testeinrichtung nach einem der vorhergehenden Ansprüche 10 bis 17,
**dadurch gekennzeichnet, dass** sie so ausgebildet ist, dass bei an das übergeordnete Überwachungszentrum (10) gemeldeten Testergebnissen(4) diese zum Ermöglichen des Ergreifens von Entstörungsmaßnahmen einem Operator des übergeordneten Überwachungszentrum (10) angezeigt werden.

## Claims

1. Method for processing alarm messages (1) in a telecommunications network, in particular for processing OMC alarm messages (1) in a mobile telecommunications network (6, 7, 10),
wherein a test for elements (5) of the telecommunications network (6) which are identified by the alarm message (1) is started (2a) by a local monitoring centre (7) in the event of this local monitoring centre (7) receiving an alarm message (1),
a further alarm message (1) relating to the alarm message (1) which has been received is sent from the local monitoring centre (7) to a superordinate monitoring centre (10), and which arrive at the local monitoring centre (7)
- results (3, 4) which relate to the test carried out in response to this alarm message (1), and/or
- one or more further alarm messages (1) are sent (3, 4) to the superordinate monitoring centre (10) with a reference to the test.

2. Method according to Claim 1,
**characterized in that** the method is carried out only at predetermined times, in particular at weekends and on public holidays.

3. Method according to one of the preceding claims,
**characterized in that** the test comprises an automatic rectification procedure.

4. Method according to one of the preceding claims,
**characterized in that** the local monitoring centre (7) automatically starts (2a) the test, at least for predetermined types (11) of alarms, without having to check with the superordinate monitoring centre (10).

5. Method according to one of the preceding claims,
**characterized in that** the method is carried out only for types of alarms (1) which are classified as being critical and are stored in a table (11) in the local monitoring centre (7).

6. Method according to one of the preceding claims,
**characterized in that**, once a test has been carried out, the local monitoring centre (7) sends to the superordinate monitoring centre (10) the results (4) of the test and the parameters which relate to the hardware (5) of the telecommunications network (6) which initiated the original alarm message (1), with a reference to the association of the test with the further alarm message (1) which has already been passed on.

7. Method according to one of the preceding claims,
**characterized in that** the test attempts to overcome the cause of the alarm message, and **in that** a negative test result means that the local monitoring centre has not been able to overcome the cause of the alarm message.

8. Method according to one of the preceding claims,
**characterized in that** the hardware (5) which is named or can be identified by the alarm message (1) is disconnected from the telecommunications network (6) and is then tested automatically for the test for detection and/or overcoming of the cause of the alarm message (1).

9. Method according to one of the preceding claims,
**characterized in that**, in the case of test results (4) which are signaled to the superordinate monitoring centre (10), these test results (4) are indicated to an operator of the superordinate monitoring centre (10) in order to allow rectification measures to be taken.

10. Test device for a monitoring centre (7), in particular for carrying out method according to one of the preceding claims,
- having an input (into 8) for defects, which relate to alarm messages (1), in elements (5) of a telecommunications network (6),
- having a device (8) for initiating (2b) tests for elements (5) of the telecommunications network which can be identified by alarm messages (1), and
- having an output device (9) for passing on alarm messages (1) and results (3, 4) of tests to a superordinate monitoring centre (10), the test device being designed such that which arrives at the local monitoring centre (7) results (3/4) which relate to the test carried out in response to an alarm message (1) and/or one or more further alarm messages (1) are sent (3, 4) to the superordinate monitoring centre (10) with a reference to the test.

11. Test device according to Claim 10, **characterized in that** the test device is designed such that messages are passed on to the superordinate monitoring centre (10) only at predetermined times, in particular at weekends and on public holidays.

12. Test device according to one of the preceding Claims 10 and 11,
**characterized in that** the test comprises an automatic rectification procedure.

13. Test device according to one of the preceding Claims 10 to 12,
**characterized in that** the test device is designed such that the local monitoring centre (7) automatically starts (2a) the test, at least for predetermined types (11) of alarms, without having to check with the superordinate monitoring centre (10).

14. Test device according to one of the preceding Claims 10 to 13,
**characterized in that** the test device has a table (11) of alarms which are classified as being critical and for which alarms only one test is to be initiated.

15. Test device according to one of the preceding Claims 10 to 14,
**characterized in that** the test device is designed such that, after the local monitoring centre (7) has carried out a test, the results (4) of the test and parameters which relate to the hardware (5) of the telecommunications network (6) which initiated the original alarm message are sent to the superordinate monitoring centre (10), with a reference to the association of the test with the further alarm message (1) which has already been passed on.

16. Test device according to one of the preceding Claims 10 to 15,
**characterized in that** the test device is designed such that the test attempts to overcome the cause of the alarm message, and such that a negative test result means that the local monitoring centre has not been able to overcome the cause of the alarm message.

17. Test device according to one of the preceding Claims 10 to 16,
**characterized in that** the test device is designed such that the hardware (5) which is named or can be identified by the alarm message (1) is disconnected from the telecommunications network (6) and is tested independently of the telecommunications network for the test for detection and/or overcoming of the cause of the alarm message (1).

18. Test device according to one of the preceding Claims 10 to 17,
**characterized in that** the test device is designed such that, in the case of test results (4) which are signaled to the superordinate monitoring centre (10), these test results (4) are indicated to an operator of the superordinate monitoring centre (10) in order to allow rectification measures to be taken.

## Revendications

1. Procédé de traitement de messages d'alarme (1) dans un réseau de télécommunication, en particulier de traitement de messages d'alarme OMC (1) dans un réseau de télécommunication mobile (6, 7, 10),
dans lequel, à partir d'un centre de surveillance local (7), lors de la réception d'un message d'alarme (1) par celui-ci (7), un test pour les éléments (5) du réseau de télécommunication (6) décrits par le message d'alarme (1), est déclenché (2a),
dans lequel, un transfert de message d'alarme (1) concernant ce message d'alarme (1) reçu par un centre de surveillance local (7), est effectué à un centre de surveillance de rang supérieur (10),
et dans lequel,
- les résultats (3/4) du test effectué concernant ce message d'alarme (1), et/ou
- un ou plusieurs messages d'alarme supplémentaires (1) avec indication du test reçus par le centre de surveillance local (7) sont envoyés (3,4) au centre de surveillance de rang supérieur (10).

2. Procédé selon la revendication 1, **caractérisé en ce que** le procédé est uniquement mis en oeuvre à des instants déterminés, en particulier durant les week-ends et les jours fériés.

3. Procédé selon l'une des revendications précédentes, **caractérisé en ce que** le test comprend une procédure de déparasitage automatique.

4. Procédé selon l'une des revendications précédentes, **caractérisé en ce que**, pour le moins en ce qui concerne des types d'alarmes déterminés (11), le centre de surveillance local (7) déclenche (2a) le test automatiquement, sans demander des précisions au centre de surveillance de rang supérieur (10).

5. Procédé selon l'une des revendications précédentes, **caractérisé en ce que** le procédé est uniquement mis en oeuvre pour des types d'alarmes (1) classifiés critiques, classés dans un tableau (11) dans le centre de surveillance local (7).

6. Procédé selon l'une des revendications précédentes, **caractérisé en ce que**, après l'exécution d'un test, le centre de surveillance local (7) envoie au centre de surveillance de rang supérieur (10) les résultats (4) du test et les paramètres relatifs au hardware (5) du réseau de télécommunication (6) déclencheur du message d'alarme initial (1), avec indication d'appartenance du test au transfert de message d'alarme (1) déjà effectué.

7. Procédé selon l'une des revendications précédentes, **caractérisé en ce que** le test tente d'éliminer la cause du message d'alarme et **en ce qu'**un résultat de test négatif signifie que le centre de surveillance local n'a pas été en mesure d'éliminer la cause du signal d'alarme.

8. Procédé selon l'une des revendications précédentes, **caractérisé en ce que**, pour le test de détection et/ou élimination de la cause du message d'alarme (1), le hardware (5) mentionné ou identifiable par le message d'alarme (1) est séparé du réseau de télécommunication (6) et ensuite testé de manière automatisée.

9. Procédé selon l'une des revendications précédentes, **caractérisé en ce que**, en ce qui concerne les résultats (4) de test annoncés au centre de surveillance de rang supérieur (10), ceux-ci sont indiqués à un opérateur du centre de surveillance de rang supérieur (10) afin de permettre la saisie de mesures de déparasitage.

10. Dispositif de test pour un centre de surveillance (7), en particulier pour la mise en oeuvre du procédé selon l'une des revendications précédentes,
- avec une entrée (in 8) pour des messages d'alarme (1) concernant des dérangements dans des éléments (5) d'un réseau de télécommunication (6),
- avec un dispositif (8) pour le déclenchement (2b) de tests pour des éléments (5) du réseau de télécommunication identifiables par les messages d'alarme (1),
- avec un dispositif de sortie (9) pour le transfert de messages d'alarme (1) et de résultats (3, 4) de tests à un centre de surveillance de rang supérieur (10),
dans lequel le dispositif de test est exécuté de telle manière que les résultats (3/4) du test effectué concernant un message d'alarme (1), et/ou un ou plusieurs messages d'alarme supplémentaires (1) avec indication du test reçus par le centre de surveillance local (7) sont envoyés (3,4) au centre de surveillance de rang supérieur (10).

11. Dispositif de test selon la revendication 10, **caractérisé en ce qu'**il est exécuté de telle manière qu'un transfert au centre de surveillance de rang supérieur (10) est uniquement mis en oeuvre à des instants déterminés, en particulier durant les week-ends et les jours fériés.

12. Dispositif de test selon l'une des revendications précédentes 10 et 11, **caractérisé en ce que** le test comprend une procédure de déparasitage automatique.

13. Dispositif de test selon l'une des revendications précédentes 10 à 12, **caractérisé en ce qu'**il est exécuté de telle manière que, pour le moins en ce qui concerne des types d'alarmes déterminés (11), le centre de surveillance local (7) déclenche (2a) le test automatiquement, sans demander des précisions au centre de surveillance de rang supérieur (10).

14. Dispositif de test selon l'une des revendications précédentes 10 à 13, **caractérisé en ce qu'**il présente un tableau (11) d'alarmes classifiées critiques, alarmes pour lesquelles seul un test doit être déclenché.

15. Dispositif de test selon l'une des revendications précédentes 10 à 14, **caractérisé en ce qu'**il est exécuté de telle manière que, après l'exécution d'un test, le centre de surveillance local (7) envoie au centre de surveillance de rang supérieur (10) les résultats (4) du test et les paramètres relatifs au hardware (5) du réseau de télécommunication (6) déclencheur du message d'alarme initial (1), avec indication d'appartenance du test au transfert de message d'alarme (1) déjà effectué.

16. Dispositif de test selon l'une des revendications précédentes 10 à 15, **caractérisé en ce qu'**il est exécuté de telle manière que le test tente d'éliminer la cause du message d'alarme, qu'un résultat de test négatif signifie que le centre de surveillance local n'a pas été en mesure d'éliminer la cause du signal d'alarme.

17. Dispositif de test selon l'une des revendications précédentes 10 à 16, **caractérisé en ce qu'**il est exécuté de telle manière que, pour le test de détection et/ou élimination de la cause du message d'alarme (1), le hardware (5) mentionné ou identifiable par le message d'alarme (1) est séparé du réseau de télécommunication (6) et testé indépendamment du réseau de télécommunication.

18. Dispositif de test selon l'une des revendications précédentes 10 à 17, **caractérisé en ce qu'**il est exécuté de telle manière que, en ce qui concerne les résultats (4) de test annoncés au centre de surveillance de rang supérieur (10), ceux-ci sont indiqués à un opérateur du centre de surveillance de rang supérieur (10) afin de permettre la saisie de mesures de déparasitage.
